# EUROPEAN PATENT SPECIFICATION

(11) **EP 3 300 922 B1**
(45) Date of publication and mention of the grant of the patent: **14.08.2019**
(21) Application number: 17192519.1
(22) Date of filing: 22.09.2017
(51) Int. Cl.: B60C 1/00, C08K 3/22, C08K 5/3437, C08K 9/06, C08L 9/06

(54) **PREPARATION OF SILICA REINFORCED RUBBER COMPOSITION, RUBBER COMPOSITION AND TIRE WITH COMPONENT**
HERSTELLUNG VON SILICIUMDIOXIDVERSTÄRKTER KAUTSCHUKZUSAMMENSETZUNG, KAUTSCHUKZUSAMMENSETZUNG UND REIFEN MIT KOMPONENTE
PRÉPARATION DE COMPOSITION DE CAOUTCHOUC RENFORCÉ DE SILICE, COMPOSITION DE CAOUTCHOUC ET PNEU COMPRENANT LE COMPOSANT

(30) Priority: 28.09.2016 US 201615278768
(43) Date of publication of application: 04.04.2018
(73) Proprietor: The Goodyear Tire & Rubber Company, Akron, OH 44316 (US)
(72) Inventor: PAPAKONSTANTOPOULOS, George Jim, Medina, OH 44256 (US); HAHN, Bruce Raymond, Hudson, OH 44210 (US)
(74) Representative: Kutsch, Bernd

(56) References cited:
- EP-A1- 0 721 971
- EP-A1- 2 722 361
- EP-A1- 3 034 328
- US-A1- 2016 264 768

## Description

### Field of the Invention

The invention relates to preparation of a silica reinforced rubber composition, a resulting rubber composition and tire with component comprising such a rubber composition. The invention relates to blending a pre-formed composite of pre-hydrophobated silica, preferably pre-hydrophobated precipitated silica, and fatty acid with a rubber composition and subsequently reacting zinc oxide therewith in situ within the rubber composition to form a zinc salt of such fatty acid of the composite. The invention further relates to promoting the reaction of the zinc oxide and the fatty acid of the composite in situ within the rubber composition in the presence of an oligomer of 1,2-dihydro-2,2,4 trimethylquinoline. The invention additionally relates to a rubber composition thereof and tires with component of such rubber compositions such as a tire tread.

### Background of the Invention

Tires may be prepared with a component comprising a rubber composition component which contains filler reinforcement comprising silica such as precipitated silica.

In one embodiment, such silica may be provided as a pre-hydrophobated precipitated silica to convert the precipitated silica from a hydrophobic state to a hydrophilic state and to thereby promote its dispersibility in a rubber composition containing a diene based elastomer.

In a further embodiment, such pre-hydrophobated may be provided as a composite thereof with a fatty acid as a processing aid to further promote its compatibility with a rubber composition containing a diene based elastomer.

The precipitated silica may be pre-hydrophobated by treating the precipitated silica with a silica coupling agent comprised of at least one of bis(3-trialkoxysilylpropyl) polysulfide and alkoxyorganomercaptosilane prior to its introduction into the rubber composition.

However, such composite of pre-hydrophobated precipitated silica and fatty acid is contemplated as retarding a rate of reactive coupling of the precipitated silica to an associated diene-based elastomer and to thereby retard a rate of reinforcement of a rubber composition containing the diene-based elastomer.

Therefore, a challenge is presented for promoting a more efficient reactive coupling of a diene-based elastomer with a pre-hydrophobated silica/fatty acid composite and particularly an acceleration of such reactive coupling.

In the description of this invention, the term "phr" relates to parts by weight for a material or ingredient per 100 parts by weight elastomer(s)". The terms "rubber" and "elastomer" are used interchangeably unless otherwise indicated. The terms "cure" and "vulcanize" are used interchangeably unless otherwise indicated.

US-A-2016/0264768 discloses a process for preparing a rubber composition prepared with pre-treaded silica. The process involves mixing a pre-hydrophobated silica/fatty acid composite with polybutadiene rubber. In a subsequent step, zinc oxide is added.

EP-A-3 034 328 describes a rubber composition containing functionalized SBR. In a non-productive mixing step, pre-hydrophobated silica is mixed with polybutadiene, functionalized SBR, zinc oxide and zinc salt of fatty acid soap.

EP-A-2 722 361 describes a process for preparing a rubber prepared with a pre-treated precipitated silica. The process involves mixing a pre-hydrophobated silica, natural rubber, polybutadiene and SBR. In a subsequent step, zinc oxide and fatty acid are added.

EP-A-0 721 971 describes a pneumatic tire having a tread made from a rubber composition containing a partially hydrophobated silica subjected to a surface treatment with an organosilicon compound so as to have a specified hydrophobization ratio.

### Summary and Practice of the Invention

The invention relates to a method in accordance with claim 1, to a rubber composition in accordance with claim 11 and to a tire in accordance with claims 12 and 13 respectively.

Dependent claims refer to preferred embodiments of the invention.

In accordance with a preferred aspect of this invention, a method is provided which comprises:
(A) forming a dispersion of hydrophobated precipitated silica in a rubber composition containing at least one diene-based elastomer by steps of:
   (1) blending a pre-hydrophobated precipitated silica/fatty acid composite (referred to herein as a composite) with a rubber composition containing at least one diene-based elastomer to form a dispersion of the composite in the rubber composition,
   (2) blending zinc oxide with the rubber composition containing the composite dispersion,
   (3) reacting the zinc oxide with the fatty acid of the composite in the rubber composition to thereby substantially convert the fatty acid of the composite to a zinc salt thereof in situ within the rubber composition and to thereby substantially remove the fatty acid from the composite to yield a substantially fatty acid-free hydrophobated precipitated silica within the rubber composition,
(B) coupling the substantially fatty acid-free hydrophobated precipitated silica to the diene-based elastomer(s) in situ within the rubber composition;
wherein the pre-hydrophobated precipitated silica is a product of reacting a precipitated silica (hydrophilic precipitated silica) with silica coupling agent comprising at least one of bis(3-trialkoxysilylpropyl) polysulfide and alkoxyorganomercaptosilane, particularly an alkoxyorganomercaptosilane,
wherein the fatty acid of the composite comprises at least one of stearic, palmitic, oleic and linoleic acid.

The method comprises reacting the zinc oxide with the fatty acid of the composite in situ within the rubber composition in the presence of an oligomer of 1,2-dihydro-2,2,4 trimethylquinoline.

In one embodiment, the zinc oxide is added together with the composite to the rubber composition.

In one embodiment, the zinc oxide is added to the rubber composition subsequent to addition of the composite to the rubber composition.

In one embodiment, the zinc oxide is added to the rubber composition in the absence of freely added fatty acid (in the absence of fatty acid added to the rubber composition other than the fatty acid of the composite).

In one embodiment, the zinc oxide reacts with the fatty acid of the composite to form a zinc/fatty ester (e.g. zinc stearate, palmitate, and/or oleate) to thereby beneficially substantially remove the fatty acid from the composite and thereby expose thiol or polysulfide groups of the composite to aid in coupling the composite to at least one diene-based elastomer in the rubber composition.

In one embodiment, the coupling of the exposed thiol or polysulfide groups to at least one diene-based elastomer in the rubber composition happens in the presence of an oligomer of 1,2-dihydro-2,2,4 trimethylquinoline to thereby accelerate the coupling reaction.

In one embodiment a silica coupler may be additionally added to the rubber composition. Representative of such silica coupler is, for example, a bis(3-triethoxysilylpropyl) polysulfide containing an average of from 2 to 4 connecting sulfur atoms in its polysulfidic bridge and an alkoxyorganomercaptosilane.

In one embodiment, a precipitated silica (non-pre-hydrophobated precipitated silica) may be added to the rubber composition.

In further accordance with this invention, a rubber composition is provided by the method.

In additional accordance with this invention a tire is provided having a component comprising such rubber composition.

Representative of various the organomercaptosilanes are, for example, triethoxy mercaptopropyl silane, trimethoxy mercaptopropyl silane, methyl dimethoxy mercaptopropyl silane, methyl diethoxy mercaptopropyl silane, dimethyl methoxy mercaptopropyl silane, triethoxy mercaptoethyl silane, and tripropoxy mercaptopropyl silane.

In further accordance with this invention, a tire of this invention is provided where the component thereof may be, for example, a tire tread such as, for example, a tread, tread cap and/or tread base, tire sidewall, tire carcass component such as, for example, a carcass cord ply coat, tire sidewall stiffening insert, an apex adjacent to or spaced apart from a tire bead, tire chafer and tire bead component.

Significantly, by the practice of this invention, an addition of a coupling agent to the rubber composition for an in-situ interaction is not considered herein as being necessary, although optional, for the hydrophobated silica to effectively reinforce the rubber composition because the pre-hydrophobated silica contains an integral coupling agent, namely, the at least one bis(3-ethoxysilylpropyl) polysulfide or alkoxyorganomercaptosilane treated silica of the composite.

However as previously indicated, if desired, a coupling agent may be added to the rubber composition to further hydrophobate the silica in situ within the rubber composition

In the practice of this invention, the various components of the tire may be a rubber composition comprising various conjugated diene based elastomers. Such diene-based elastomers may be polymers and copolymers of conjugated dienes, such as, for example, isoprene and 1,3-butadiene, and copolymers of at least one conjugated diene hydrocarbon and vinyl aromatic compound selected from styrene and alphamethyl styrene, preferably styrene.

For example, representative of such elastomers are cis 1,4-polyisoprene rubber (natural and synthetic), cis 1,4-polybutadiene rubber, high vinyl polybutadiene rubber having a vinyl 1,2 content in a range of from 10 percent to 90 percent, styrene/butadiene copolymer (SBR) rubber (aqueous emulsion or organic solution polymerization prepared copolymers) and including organic solvent polymerization prepared SBR having a vinyl 1,2- content in a range of from 10 to 90 percent based on its polybutadiene derived portion and a polystyrene content in a range of from 10 to 60 percent based upon the copolymer, styrene/isoprene/butadiene terpolymer rubber, butadiene/acrylonitrile rubber, styrene/isoprene copolymer and isoprene/butadiene copolymer rubber, 3,4-polyisoprene rubber and trans 1,4-polybutadiene rubber.

Organic solvent polymerization prepared tin or silicon coupled elastomers such as for example, tin or silicon coupled styrene/butadiene copolymers, may also be used.

Tin or silicon coupled copolymers of styrene/butadiene may be prepared, for example, by introducing a tin or silicon coupling agent during the styrene/1,3-butadiene monomer copolymerization reaction in an organic solvent solution, usually at or near the end of the polymerization reaction.

In practice, it is usually preferred that at least 50 percent, and more generally in a range of 60 to 85 percent, of the Sn (tin) bonds in the tin coupled elastomers are bonded to butadiene units of the styrene/butadiene copolymer to create Sn-dienyl bonds such as butadienyl bonds.

Creation of tin-dienyl bonds can be accomplished in a number of ways such as, for example, sequential addition of butadiene to the copolymerization system or use of modifiers to alter the styrene and/or butadiene reactivity ratios for the copolymerization. Such techniques, whether used with a batch or a continuous copolymerization system, are well known to those having skill in such art.

Various tin compounds, particularly organo tin compounds, may be used for the coupling of the elastomer. Representative of such compounds are, for example, alkyl tin trichloride, dialkyl tin dichloride, yielding variants of a tin coupled styrene/butadiene copolymer elastomer, although a trialkyl tin monochloride might be used which would yield simply a tin-terminated copolymer.

Examples of tin-modified, or coupled, styrene/butadiene copolymer elastomers can be found, for example, in US-A-5,064,901.

As previously indicated, various commercially available precipitated silicas may also be added to the rubber composition together with the the pre-hydrophobated silica for the reinforcement of the diene based elastomers. Such precipitated silica may typically be characterized by their BET surface areas. Representative of such silicas, for example, only and without limitation, are silicas available from PPG Industries under the Hi-Sil trademark with designations 210 and 243, silicas available from Solvay with designations of Zeosil 1165MP and Zeosil 165GR, silicas available from Evonik with designations VN2 and VN3, and silicas available from Huber as Zeopol 8745 and Zeopol 8715.

It is readily understood by those having skill in the art that the rubber composition of the tread rubber would be compounded by methods generally known in the rubber compounding art, such as mixing the various sulfur-vulcanizable constituent rubbers with various commonly used additive materials such as, for example, curing aids, such as sulfur, activators, retarders and accelerators, processing additives, such as oils, resins including tackifying resins and plasticizers, fillers, pigments, fatty acid, zinc oxide, waxes, antioxidants and antiozonants, peptizing agents and reinforcing materials such as, for example, carbon black. As known to those skilled in the art, depending on the intended use of the sulfur vulcanizable and sulfur vulcanized material (rubbers), the additives mentioned above are selected and commonly used in conventional amounts.

The tires can be built, shaped, molded and cured by various methods which will be readily apparent to those having skill in such art.

### EXAMPLE I

Rubber compositions were prepared to evaluate preparation of precipitated silica reinforced rubber composition by blending a pre-formed composite of pre-hydrophobated precipitated silica and fatty acid with a rubber composition and subsequently reacting zinc oxide therewith in situ within the rubber composition to form a zinc salt of such fatty acid of the composite, in the absence of freely added fatty acid.

Rubber compositions were further prepared to evaluate reaction of the zinc oxide and the fatty acid of the composite in situ within the rubber composition in the presence of an oligomer of 1,2-dihydro-2,2,4 trimethylquinoline.

The basic formulation for the evaluation is illustrated in the following Table 1 which is presented in terms of parts per 100 parts by weight of rubber (phr).

For this evaluation, rubber compositions are prepared by mixing the elastomers(s) without sulfur and sulfur cure accelerators in a non-productive mixing stage (NP) in an internal rubber mixer for 3 to 6 minutes to a temperature of from 155 to 170°C.

The resulting mixture was not further mixed in a productive mixing stage (PR) in an internal rubber mixer with sulfur and sulfur cure accelerator(s) in order to evaluate the effect of the zinc oxide and of the oligomer of 1,2-dihydro-2,2,4 trimethylquinoline.

**Table 1 - General Formulation**

| Non-Productive Mixing Step (NP) | Parts (phr) |
|---|---|
| Styrene/butadiene rubber (SBR)¹ | 100 |
| Composite of pre-hydrophobated precipitated silica and fatty acid² | 50 |
| 1,2-dihydro-2,2,4 trimethylquinoline (TMQ)³ | 0, 2 |
| Zinc oxide | 0.5, 1, 2, 4 |

| | |
|---|---|
| ¹Styrene/butadiene rubber as Solflex™ 16542 from The Goodyear Tire & Rubber Company having a Tg of about -42°C and a bound styrene content of about 16 percent ²Composite of precipitated silica hydrophobated with alkoxyorganomercaptosilane, and containing fatty acid, as Agilon 400™ from PPG Industries ³TMQ, an oligomer of 1,2-dihydro-2,2,4 trimethylquinoline from Lanxess. | |

The following Table 2 represents the uncured and cure behavior and various physical properties of the rubber compositions based upon the basic formulation of Table 1, and reported as rubber Samples C1 through C5. Test samples were cured for 30 minutes at 160°C.

**Table 2**

| | Samples | | | | |
|---|---|---|---|---|---|
| | C1 | C2 | C3 | C4 | C5 |
| Styrene/butadiene rubber composite | 100 | 100 | 100 | 100 | 100 |
| Pre-hydrophobated precipitated silica & fatty acid | 50 | 50 | 50 | 50 | 50 |
| TMQ | 2 | 2 | 2 | 2 | 0 |
| Zinc oxide | 0.5 | 1 | 2 | 4 | 4 |

| Properties | | | | | |
|---|---|---|---|---|---|
| RPA test (Rubber Process Analyzer). Storage Modulus (G') kPa | | | | | |
| Uncured G', 15% strain 0.83 Hertz, 100°C | 436 | 459 | 458 | 475 | 545 |
| Cured G', 10% strain, 1 Hertz, 100°C, kPa | 514 | 576 | 580 | 633 | 583 |
| Tan delta, 10% strain, 1 Hertz, 100°C | 0.43 | 0.38 | 0.38 | 0.34 | 0.44 |

It can be seen from Table 2 that progressively increasing an addition of from 0.5 to 4 parts of the zinc oxide, in the presence of the 1,2-dihydro-2,2,4 trimethylquinoline (the TMQ), progressively increased the cured G' value of the rubber Samples C1 through C4 from a value of 514 to a value of 633 kPa which is an indication of increasing the cured stiffness of the rubber compositions.

It can further be seen from Table 2 that progressively increasing an addition of from 0.5 to 4 parts of the zinc oxide, in the presence of the oligomer of 1,2-dihydro-2,2,4 trimethylquinoline (the TMQ), decreased the tan delta value of the rubber Samples C1 through C4 from a value of 0.43 to a value of 0.34 which is an indication of a beneficial decrease in hysteresis of the rubber compositions.

However, the cured G' value was significantly decreased to a value of 583 kPa when the TMQ was not used in rubber Sample C5 when compared to rubber Sample C4 with a G' value of 633 which contained the TMQ, and where both of the rubber Samples C4 and C5 contained 4 parts of the zinc oxide.

However, the tan delta value was significantly increased to a value of 0.44 when the TMQ was not used in rubber Sample C5 when compared to rubber Sample C4 with a tan delta of 0.34 which contained the TMQ, and where both of the rubber Samples C4 and C5 contained 4 parts of the zinc oxide.

Therefore it is concluded that while the added zinc oxide beneficially reacts with the fatty acid contained in the composite of pre-hydrophobated precipitated silica to thereby displace some of the fatty acid from the precipitated silica surface of the composite, it has been discovered that a combination of the zinc oxide and the TMQ acts in a synergistic manner to enhance the reaction between the elastomer and the pre-hydrophobated precipitated silica surface.

It is concluded that TMQ combined with the added zinc oxide synergistically promoted an increased polymer-filler interaction of the composite of pre-hydrophobated precipitated silica and fatty acid to result in a beneficial increased cured stiffness (increased cured G') and beneficial decreased hysteresis (reduced tan delta) of the rubber composition which are predictive of beneficial improvement in reduction of rolling resistance and increase in dry handling stiffness for a tire with tread of such rubber composition.

### EXAMPLE II

Rubber compositions were prepared to evaluate preparation of precipitated silica reinforced rubber composition by blending a pre-formed composite of pre-hydrophobated precipitated silica and fatty acid with a rubber composition and subsequently reacting zinc oxide therewith in situ within the rubber composition to form a zinc salt of such fatty acid of the composite, in the absence of freely added fatty acid.

Rubber compositions were further prepared to evaluate promoting the reaction of the zinc oxide and the fatty acid of the composite in situ within the rubber composition in the presence of an oligomer of 1,2-dihydro-2,2,4 trimethylquinoline (TMQ).

The basic formulation for the evaluation is illustrated in the following Table 3 which is presented in terms of parts per 100 parts by weight of rubber (phr).

For this evaluation, rubber compositions are prepared by mixing the elastomers(s) without sulfur and sulfur cure accelerators in a first non-productive mixing stage (NP-1) in an internal rubber mixer for 3 to 5 minutes to a temperature of from 150 to 170°C. The rubber mixture is then mixed in a second non-productive mixing stage (NP-2) in an internal rubber mixer for 3 to 5 minutes to a temperature of from 150 to 170°C with the addition of the rest of the ingredients for the non-productive part of the mixes. The resulting rubber mixture is then mixed in a productive mixing stage (PR) in an internal rubber mixer with sulfur and sulfur cure accelerator(s) for 2 to 4 minutes to a temperature of from 95 to 110°C. The rubber composition may be sheeted out and cooled to below 50°C between each of the non-productive mixing steps and prior to the productive mixing step. Such rubber mixing procedure is well known to those having skill in such art.

**Table 3 - General Formulation**

| First Non-Productive Mixing Step (NP1) | Parts |
|---|---|
| Styrene/butadiene rubber (SBR)¹ | 60 |
| Cis 1,4-Polybutadiene rubber² | 40 |
| Composite of pre-hydrophobated precipitated silica and fatty acid³ | 50 |
| Fatty acid⁴ | 2 |
| Resin⁵ | 5.5 |
| Zinc stearate | 4 |
| Rubber processing oil | 11 |
| TMQ⁷ | 0, 1 |
| Zinc oxide | 0, 5 |
| | |

| Second Non-Productive Mixing Step (NP2) | |
|---|---|
| Carbon black⁶ | 2 |
| Composite of pre-hydrophobated precipitated silica and fatty acid³ | 40 |
| Resin⁵ | 12.5 |
| Antidegradant | 3.5 |
| Rubber processing oil | 4 |
| TMQ⁷ | 0, 1 |
| Zinc oxide | 0, 5 |
| | |

| Productive Mixing Step (PR) | |
|---|---|
| Zinc oxide | 0, 1.75 |
| Antidegradant | 0.75 |
| Sulfur | 1.6 |
| Sulfur vulcanization accelerators⁸ | 3 |

| | |
|---|---|
| ¹Styrene/butadiene rubber having a Tg of about -22°C and a bound styrene content of about 20 percent ²Cis 1,4-polybutadiene rubber as Budene™ 1223 from The Goodyear Tire & Rubber Company ³Composite of precipitated silica hydrophobated with alkoxyorganomercaptosilane, and containing fatty acid, as Agilon 400™ from PPG Industries ⁴Fatty acid comprised of stearic, palmitic and oleic acids ⁵Styrene-alphamethylstyrene resin ⁶Carbon black as N330, an ASTM designation ⁷TMQ, an oligomer of 1,2-dihydro-2,2,4 trimethylquinoline ⁸Sulfenamide and diphenylguanidine | |

The following Table 4 represents the uncured and cure behavior and various physical properties of the rubber compositions based upon the basic formulation of Table 1, and reported as rubber Samples D1 through D3. Test samples were cured for 30 minutes at 150°C.

**Table 4**

| | Samples | | |
|---|---|---|---|
| | D1 | D2 | D3 |
| NP1 Mixing Step | | | |
| Styrene/butadiene rubber | 60 | 60 | 60 |
| Cis 1,4-polybutdiene rubber | 40 | 40 | 40 |
| Composite: pre-hydrophobated precipitated silica & fatty acid | 50 | 50 | 50 |
| TMQ | 0 | 1 | 0 |
| Zinc oxide | 0 | 5 | 0 |
| | | | |

| NP2 Mixing Step | | | |
|---|---|---|---|
| Composite: pre-hydrophobated precipitated silica & fatty acid | 40 | 40 | 40 |
| TMQ | 1 | 0 | 0 |
| Zinc oxide | 5 | 0 | 0 |
| | | | |

| Productive Mixing Step | | | |
|---|---|---|---|
| Zinc Oxide | 0 | 0 | 2 |

| Properties | | | |
|---|---|---|---|
| RPA test (Rubber Process Analyzer), Storage Modulus (G') kPa | | | |
| Uncured G', 15% strain 0.83 Hertz, 100°C | 246 | 315 | 311 |
| Cured G', 10% strain, 1 Hertz, 100°C, kPa | 1075 | 1118 | 1316 |
| Tan Delta, 10% strain, 1 Hertz, 100°C | 0.05 | 0.1 | 0.07 |
| | | | |

| Stress-strain | | | |
|---|---|---|---|
| **E**longation at break (%) | 435 | 524 | 417 |
| 300% modulus, (MPa) | 9.4 | 8.5 | 11.2 |
| | | | |

| Rebound | | | |
|---|---|---|---|
| Room Temperature (23°C) | 45 | 41 | 38 |
| 100°C | 77 | 64 | 71 |

It can be seen from Table 4 that the addition of zinc oxide in the non-productive stages for rubber Samples D1 and D2, and especially for the preparation of rubber Sample D1 where the zinc oxide was added after all of the composite of pre-hydrophobated precipitated silica and fatty acid had been added, can have a beneficial effect on the compound viscoelastic properties as indicated by a lower tan delta physical property (at 10% strain, 100°C, 1 Hertz) which, in turn, is predictive of a beneficial reduction in hysteresis for the rubber composition and beneficial lower rolling resistance for a tire with a tread of such rubber composition.

This option is the one that will allow for the highest probability of the aforementioned reactions to take place and increase the polymer filler interaction. Sample D1 exhibits the best indicated performance with respect to rolling resistance demonstrating the lowest hysteresis values (lowest tan delta value and the highest rebound values).

Therefore, it is concluded that addition of zinc oxide together with the TMQ in a non-productive mixing stage after addition of pre-hydrophobated silica allows for a synergistic interaction of the combination of zinc oxide and TMQ with the pre-hydrophobated silica/fatty acid composite which resulted in an increase in polymer-filler interaction as evidenced by improved hysteresis properties (increased rebound properties and decreased tan delta property) of the rubber composition of rubber Sample D1.

## Claims

1. A method of manufacturing a rubber composition, the method comprising:
(A) forming a dispersion of hydrophobated silica in a rubber composition containing at least one diene-based elastomer by steps of:
(1) blending a pre-hydrophobated silica/fatty acid composite with a rubber composition containing at least one diene-based elastomer to form a dispersion of the composite in the rubber composition;
(2) blending zinc oxide with the rubber composition containing the composite dispersion; and
(3) reacting the zinc oxide with the fatty acid of the composite in situ within the rubber composition in the presence of an oligomer of 1,2-dihydro-2,2,4 trimethylquinoline to thereby accelerate the coupling of the substantially fatty acid-free hydrophobated silica to the diene-based elastomer(s) within the rubber composition, to thereby substantially convert the fatty acid of the composite to a zinc salt thereof in situ within the rubber composition and to thereby substantially remove the fatty acid from the composite to yield a substantially fatty acid-free hydrophobated silica within the rubber composition;
(B) coupling the substantially fatty acid-free hydrophobated silica to the diene-based elastomer(s) in situ within the rubber composition.

2. The method of claim 1 wherein the pre-hydrophobated silica is a product of reacting a silica, preferably a precipitated silica or a hydrophilic precipitated silica, with a silica coupling agent comprising at least one of bis(3-trialkoxysilylpropyl) polysulfide and alkoxyorganomercaptosilane, particularly an alkoxyorganomercaptosilane.

3. The method of claim 1 or 2 wherein the fatty acid of the composite comprises at least one of stearic, palmitic, oleic and linoleic acid.

4. The method of at least one of the previous claims wherein the method comprises adding the zinc oxide together with the composite to the rubber composition.

5. The method of at least one of the previous claims 1 to 3 wherein the method comprises adding the zinc oxide to the rubber composition subsequent to addition of the composite to the rubber composition.

6. The method of at least one of the previous claims wherein the zinc oxide is added to the rubber composition in the absence of freely added fatty acid.

7. The method of at least one of the previous claims wherein the zinc oxide is reacted with the fatty acid of the composite to form a zinc/fatty ester to thereby substantially remove the fatty acid from the composite and thereby expose thiol or polysulfide groups of the composite to aid in coupling the composite to at least one diene-based elastomer in the rubber composition.

8. The method of at least one of the previous claims wherein a silica coupler is additionally added to the rubber composition, the silica coupler preferably comprising a bis(3-triethoxysilylpropyl) polysulfide containing an average of from 2 to 4 connecting sulfur atoms in its polysulfidic bridge or an alkoxyorganomercaptosilane.

9. The method of at least one of the previous claims wherein the organomercaptosilane comprises at least one of triethoxy mercaptopropyl silane, trimethoxy mercaptopropyl silane, methyl dimethoxy mercaptopropyl silane, methyl diethoxy mercaptopropyl silane, dimethyl methoxy mercaptopropyl silane, triethoxy mercaptoethyl silane, and tripropoxy mercaptopropyl silane.

10. The method of at least one of the previous claims wherein the silica is precipitated silica.

11. A rubber composition prepared by the method of at least one of the preceding claims.

12. A tire having a component comprising the rubber composition of claim 11.

13. A tire having a tread comprising the rubber composition of claim 11.

## Patentansprüche

1. Verfahren zum Fertigen einer Kautschukzusammensetzung, wobei das Verfahren Folgendes umfasst:
(A) Ausbilden einer Dispersion von hydrophobiertem Siliciumdioxid in einer Kautschukzusammensetzung, die wenigstens ein dienbasiertes Elastomer enthält, durch die folgenden Schritte:
(1) Mischen einer vorhydrophobierten Siliciumdioxid/Fettsäurezusammensetzung mit einer Kautschukzusammensetzung, die wenigstens ein dienbasiertes Elastomer enthält, um eine Dispersion des Verbundstoffs in der Kautschukzusammensetzung auszubilden;
(2) Mischen von Zinkoxid mit der Kautschukzusammensetzung, die die Verbundstoffdispersion enthält; und
(3) Umsetzen des Zinkoxids mit der Fettsäure des Verbundstoffs *in situ* innerhalb der Kautschukzusammensetzung in der Gegenwart eines Oligomers eines 1,2-Dihydro-2,2,4-trimethylchinolins, um dadurch das Koppeln des im Wesentlichen fettsäurefreien hydrophobierten Siliciumdioxids an das/die dienbasierte(n) Elastomer/Elastomere innerhalb der Kautschukzusammensetzung zu beschleunigen, um dadurch die Fettsäure des Verbundstoffs im Wesentlichen *in situ* innerhalb der Kautschukzusammensetzung in ein Zinksalz davon umzuwandeln und um dadurch die Fettsäure im Wesentlichen aus dem Verbundstoff zu entfernen, um ein im Wesentlichen fettsäurefreies hydrophobiertes Siliciumdioxid innerhalb der Kautschukzusammensetzung abzuwerfen;
(B) Koppeln des im Wesentlichen fettsäurefreien hydrophobierten Siliciumdioxids an das/die dienbasierte(n) Elastomer/Elastomere *in situ* innerhalb der Kautschukzusammensetzung.

2. Verfahren nach Anspruch 1, wobei das vorhydrophobierte Siliciumdioxid ein Produkt des Umsetzens eines Siliciumdioxids, vorzugsweise eines ausgefällten Siliciumdioxids oder eines hydrophilen ausgefällten Siliciumdioxids, mit einem Siliciumdioxidhaftvermittler ist, der bis(3-Trialkoxysilylpropyl)polysulfid und/oder Alkoxyorganomercaptosilan, insbesondere ein Alkoxyorganomercaptosilan, umfasst.

3. Verfahren nach Anspruch 1 oder 2, wobei die Fettsäure des Verbundstoffs Stearin-, Palmitin-, Öl- und/oder Linolsäure umfasst.

4. Verfahren nach wenigstens einem der vorhergehenden Ansprüche, wobei das Verfahren ein Hinzufügen des Zinkoxids zusammen mit dem Verbundstoff zu der Kautschukzusammensetzung umfasst.

5. Verfahren nach wenigstens einem der vorhergehenden Ansprüche 1 bis 3, wobei das Verfahren das Hinzufügen des Zinkoxids zu der Kautschukzusammensetzung nachfolgend zu dem Hinzufügen des Verbundstoffs zu der Kautschukzusammensetzung umfasst.

6. Verfahren nach wenigstens einem der vorhergehenden Ansprüche, wobei das Zinkoxid zu der Kautschukzusammensetzung in der Abwesenheit von frei hinzugefügter Fettsäure hinzugefügt wird.

7. Verfahren nach wenigstens einem der vorhergehenden Ansprüche, wobei das Zinkoxid mit der Fettsäure des Verbundstoffs umgesetzt wird, um einen Zink/Fettester auszubilden, um dadurch die Fettsäure im Wesentlichen aus dem Verbundstoff zu entfernen und dadurch Thiol- oder Polysulfidgruppen des Verbundstoffs freizulegen, um das Koppeln des Verbundstoffs an wenigstens ein dienbasiertes Elastomer in der Kautschukzusammensetzung zu unterstützen.

8. Verfahren nach wenigstens einem der vorhergehenden Ansprüche, wobei zusätzlich ein Siliciumdioxidkuppler zu der Kautschukzusammensetzung hinzugefügt wird, wobei der Siliciumdioxidkuppler vorzugsweise ein bis(3-Triethoxysilylpropyl)polysulfid, das einen Durchschnitt von 2 bis 4 verbindenden Schwefelatomen in seiner polysulfidischen Brücke enthält, oder ein Alkoxyorganomercaptosilan umfasst.

9. Verfahren nach wenigstens einem der vorhergehenden Ansprüche, wobei das Organomercaptosilan Triethoxymercaptopropylsilan, Trimethoxymercaptopropylsilan, Methyldimethoxymercaptopropylsilan, Methyldiethoxymercaptopropylsilan, Dimethylmethoxymercaptopropylsilan, Triethoxymercaptoethylsilan und/oder Tripropoxymercaptopropylsilan umfasst.

10. Verfahren nach wenigstens einem der vorhergehenden Ansprüche, wobei das Siliciumdioxid ausgefälltes Siliciumdioxid ist.

11. Kautschukzusammensetzung, hergestellt durch das Verfahren nach wenigstens einem der vorhergehenden Ansprüche.

12. Reifen mit einer Komponente, die die Kautschukzusammensetzung nach Anspruch 11 umfasst.

13. Reifen mit einer Lauffläche, die die Kautschukzusammensetzung nach Anspruch 11 umfasst.

## Revendications

1. Procédé de préparation d'une composition de caoutchouc, le procédé comprenant le fait de :
(A) former une dispersion d'une silice rendue hydrophobe dans une composition de caoutchouc contenant au moins un élastomère à base diénique en passant par les étapes consistant à :
(1) soumettre à un mélange intime un composite de silice rendue au préalable hydrophobe/acide gras avec une composition de caoutchouc contenant au moins un élastomère à base diénique afin d'obtenir une dispersion du composite dans la composition de caoutchouc ;
(2) soumettre à un mélange intime de l'oxyde de zinc avec la composition de caoutchouc contenant la dispersion de composite ; et
(3) faire réagir l'oxyde de zinc avec l'acide gras du composite in situ au sein de la composition de caoutchouc en présence d'un oligomère de 1,2-dihydro-2,2,4-triméthyl-quinoléine pour ainsi accélérer le couplage de la silice rendue hydrophobe essentiellement exempte d'acide gras à l'élastomère ou aux élastomères à base diénique au sein de la composition de caoutchouc pour ainsi transformer de manière substantielle l'acide gras du composite en un sel de zinc dudit acide gras in situ au sein de la composition de caoutchouc et pour ainsi éliminer de manière substantielle l'acide gras du composite afin d'obtenir une silice rendue hydrophobe essentiellement exempte d'acide gras au sein de la composition de caoutchouc ;
(B) coupler la silice rendue hydrophobe essentiellement exempte d'acide gras à l'élastomère ou aux élastomères à base diénique in situ au sein de la composition de caoutchouc.

2. Procédé selon la revendication 1, dans lequel la silice rendue au préalable hydrophobe représente un produit de la réaction d'une silice, de préférence d'une silice précipitée ou d'une silice précipitée hydrophile, avec un agent de couplage pour la silice comprenant au moins un agent choisi parmi un bis(3-trialcoxysilylpropyl) polysulfure et un alcoxyorganomercaptosilane, en particulier un alcoxyorganomercaptosilane.

3. Procédé selon la revendication 1 ou 2, dans lequel l'acide gras du composite comprend au moins un acide choisi parmi l'acide stéarique, l'acide palmitique, l'acide oléique et l'acide linoléique.

4. Procédé selon au moins une des revendications précédentes, dans lequel le procédé comprend le fait d'ajouter l'oxyde de zinc de manière conjointe avec le composite à la composition de caoutchouc.

5. Procédé selon au moins une des revendications 1 à 3, dans lequel le procédé comprend le fait d'ajouter l'oxyde de zinc à la composition de caoutchouc suite à l'addition du composite à la composition de caoutchouc.

6. Procédé selon au moins une des revendications précédentes, dans lequel l'oxyde de zinc est ajouté à la composition de caoutchouc en l'absence d'acide gras librement ajouté.

7. Procédé selon au moins une des revendications précédentes, dans lequel l'oxyde de zinc est mis à réagir avec l'acide gras du composite afin d'obtenir un ester d'acide gras/zinc pour ainsi éliminer de manière substantielle l'acide gras du composite et exposer de cette manière des groupes thiol ou polysulfure du composite afin de favoriser le couplage du composite à au moins un élastomère à base diénique dans la composition de caoutchouc.

8. Procédé selon au moins une des revendications précédentes, dans lequel un agent de couplage pour la silice est ajouté en plus à la composition de caoutchouc, l'agent de couplage pour la silice comprenant de préférence un bis(3-triéthoxysilylpropyl) polysulfure contenant en moyenne de 2 à 4 atomes de soufre de liaison dans son pont polysulfure ou un alcoxyorganomercaptosilane.

9. Procédé selon au moins une des revendications précédentes, dans lequel l'organomercaptosilane comprend au moins un silane choisi parmi le triéthoxy mercaptopropyl silane, le triméthoxy mercaptopropyl silane, le méthyl diméthoxy mercaptopropyl silane, le méthyl diéthoxy mercaptopropyl silane, le diméthyl méthoxy mercaptopropyl silane, le triéthoxy mercaptoéthyl silane et le tripropoxy mercaptopropyl silane.

10. Procédé selon au moins une des revendications précédentes, dans lequel la silice est de la silice précipitée.

11. Composition de caoutchouc préparée via le procédé selon au moins une des revendications précédentes.

12. Bandage pneumatique possédant un composant comprenant la composition de caoutchouc selon la revendication 11.

13. Bandage pneumatique possédant une bande de roulement comprenant la composition de caoutchouc selon la revendication 11.
